Europäisches Patentamt

European Patent Office

Office européen des brevets

(19)

(11) Veröffentlichungsnummer : **0 188 217**
**B1**

# (12) EUROPÄISCHE PATENTSCHRIFT

(45) Veröffentlichungstag der Patentschrift :
23.11.89

(21) Anmeldenummer : 86100136.0

(22) Anmeldetag : 07.01.86

(51) Int. Cl.⁴ : **C 09 K   3/10**

(54) Plastische Dichtung und Verfahren zum Herstellen der Dichtung.

(30) Priorität : 12.01.85 DE 3500924

(43) Veröffentlichungstag der Anmeldung :
23.07.86 Patentblatt 86/30

(45) Bekanntmachung des Hinweises auf die Patenterteilung : 23.11.89 Patentblatt 89/47

(84) Benannte Vertragsstaaten :
BE DE FR GB IT NL SE

(56) Entgegenhaltungen :
DE--A-- 2 608 257
DE--A-- 2 747 737
DE--A-- 3 407 995

(73) Patentinhaber : Henkel Kommanditgesellschaft auf Aktien
Postfach 1100 Henkelstrasse 67
D-4000 Düsseldorf-Holthausen (DE)

(72) Erfinder : Bücken, Hans-Jürgen
Heideweg 48
D-4019 Monheim (DE)
Erfinder : Hempel, Hans-Ulrich, Dr.
Nordstrasse 33
D-4018 Langenfeld (DE)
Erfinder : Pabel, Hans
Parkstrasse 8
D-4000 Düsseldorf (DE)

## Beschreibung

Die Erfindung richtet sich auf eine plastische Dichtung mit einer Polymermischung, insbesondere aus Buthylkautschuk, Polyisobutylen, Styrol-Butadien-Kautschuk, Polychloropren, Naturkautschuk oder Polyvinylchlorid, als Dichtmassestrang zwischen einem abziehbaren Trägerpapier, z. B. Silikonpapier, und einer flexiblen Deckfolie, insbesondere einer Schmelzfolie. Sie richtet sich ferner auf ein Verfahren zum Herstellen der Dichtung.

Dichtungen zum Korrosionsschutz sowie zum Vermindern der Geräuschemission, insbesondere in Kraftfahrzeugen, können aus selbstklebenden Kautschukmischungen mit einem Träger aus Silikonpapier und einer Deckschicht aus Schmelzfolie bestehen. Aus solchen Dichtungsbändern lassen sich für die jeweilige Anwendung passende Dichtungsformate stanzen bzw. schneiden.

Bei der Anwendung werden fertiggestanzte oder geschnittene Dichtungsstreifen oder -flecken zwischen zwei Flächen, z. B. zwischen Rahmen und Türscharnier eines Kraftfahrzeuges, eingebracht. Beim Anziehen der die Flächen verbindenden Schrauben wuillt die Dichtungsmasse seitlich aus. Dieses Auspressen kann mit der Zeit dazu führen, daß sich die Verbindung lockert.

Aus der DE-A-26 08 257 und der DE-A-27 47 737 sind Dichtungen bekannt, die eine mit kompressionsbeständigen Elementen versehene Abdichtungsmasse aufweisen, die abziehbar auf einer Unterlagebahn befestigt ist und in Form eines Abdichtungsstreifens vorliegt.

Der Erfindung liegt die Aufgabe zugrunde, gattungsgemäße plastische Dichtungen dahingehend zu verbessern, daß sie die sich widersprechenden Forderungen nach Dauerelastizität und begrenzter Preßbarkeit zugleich erfüllen und dem Druck der sie pressenden Flächen auf Dauer widerstehen können, wobei eine problemlose Schneid- oder Stanzbarkeit der Dichtungen in gewünschten Bereichen möglich sein soll.

Bei plastischen Dichtungen der eingangs bezeichneten Art wird diese Aufgabe gemäß der Erfindung dadurch gelöst, daß in den Dichtmassestrang einlagig, Kugelform oder eine ähnlich gerundete Form aufweisende Distanzkörper von annähernd gleichem Durchmesser, der jeweils 1/2 bis 2/3 der Dichtungsdicke beträgt, aus einem gegenüber dem Material der Polymermischung harten Werkstoff derart orientiert eingebettet sind, daß der Dichtmassestrang im Bereich von Stanzlinien zum Querteilen des Stranges in einzelne Dichtungsstreifen oder zur Stanzung von Aussparungen distanzkörperfrei ausgebildet ist.

Vorzugsweise bestehen die Distanzkörper aus Glas, es kann jedoch auch günstig sein, sie aus anderen harten Werkstoffen, z. B. aus Metall, insbesondere Stahl, aus keramischem Werkstoff, Quarz oder Kunststoff, herzustellen. Die Distanzkörper haben vorzugsweise Kugelform, es werden aber auch andere runde Formen, z. B. ovale Körper, wie Ellipsoide oder dergleichen, bevorzugt. Weiterhin sollen die Distanzkugeln alle etwa dieselbe Größe besitzen, in Frage kommen daher in erster Linie eng fraktionierte Glaskugeln.

Durch die erfindungsgemäßen Distanzkörper wird erreicht, daß die Plastizität und damit der Korrosionsschutz und die Verminderung der Geräuschemission oder dergleichen an sich erhalten werden, aber die Dichtung ohne die Gefahr zusätzlichen Herauspressens von Dichtmaterial so stark zu pressen ist, daß die Gefahr eines Lockerns der geschützten Verbindung auch auf Dauer praktisch ausgeschlossen ist.

Wenn das Ausgangsmaterial zum Herstellen der erfindungsgemäßen Dichtung in Form langer Streifen bzw. Stränge vorliegt, können die eingebetteten Distanzkörper beim Stanzen oder Schneiden hindern bzw. in spitze Stücke zerteilt werden. Das würde eine Beschädigung der Schneid- oder Stanzwerkzeuge sowie der an die Dichtung angrenzenden Flächen der zu schützenden Verbindung durch spitze Teilstücke der Distanzkörper zur Folge haben können. Gemäß weiterer Erfindung besteht daher ein Verfahren zum Herstellen einer erfindungsgemäßen Dichtung, bei dem aus einem relativ großflächigen Dichtmassestrang Dichtungsstreifen oder dergleichen einer jeweils gewünschten Form ausgeschnitten werden, darin, daß die vorgesehenen Schneidlinien im wesentlichen frei von Distanzkörpern gehalten werden. Vorzugsweise werden die Distanzkörper in einzelnen außerhalb schmaler partikelfreier Bereiche längs der Schneidlinien liegender Spuren aufgebracht bzw. eingebettet.

Anhand der schematischen Zeichnung eines Ausführungsbeispiels werden Einzelheiten der Erfindung erläutert. Es zeigen :

Fig. 1 die Draufsicht auf eine Dichtung ; und
Fig. 2 ein Querschnitt der Dichtung nach Fig. 1.

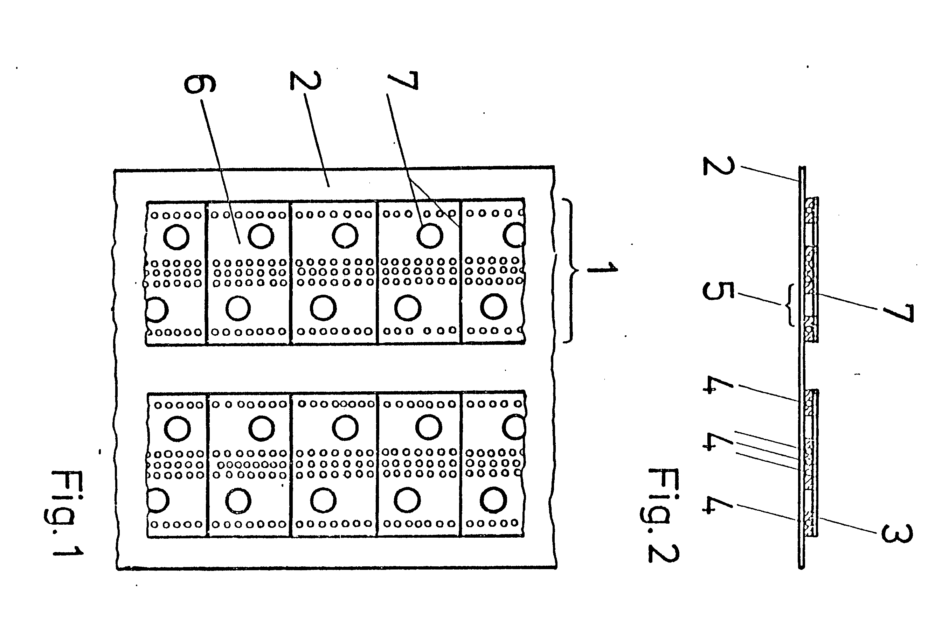

In Fig. 1 und 2 wird ein Teil eines insgesamt mit 1 bezeichneten, flachen plastischen Strangs 1 in Draufsicht und Querschnitt gezeichnet. Nach Fig. 2 wird der Strang 1 zwischen einem Trägerpapier 2 und einer Deckfolie 3 als Sandwich eingeschlossen. Der aus beispielsweise Buthylkautschuk bestehende Strang 1 enthält erfindungsgemäß Distanzkörper 4. Die Körper 4 werden innerhalb des Materials des Strangs so verteilt, daß schmale partikelfreie Bereiche 5 längs der zum Unterteilen des Strangs 1 in einzelne Dichtungsstreifen 6 vorgesehenen Schneidlinien 7 von Distanzkörpern 4 frei bleiben. Beispielsweise können die Distanzkörper 4 nach dem Herstellen des Strangs 1 aber vor der Deckfolie 3 auf das Strangmaterial in den gewünschten Spuren aufgebracht werden.

In einem Herstellungsverfahren laufen die Distanzkörper 4, insbesondere Kugeln, aus einem Trichter über eine Vibrationsdosierrinne in ein Verteilergerät. Dieses Gerät hat die Aufgabe, jeder Spur die gleiche Anzahl an Distanzkörpern zuzuführen. Durch Schläuche werden die Teilströme dann durch Trichter oder Vibrationsrinnen geleitet. Die Trichter oder Rinnen werden entsprechend der Formate, über dem darunter herlaufenden Strang aus Dichtungsmaterial, so angeordnet, daß die Schneidlinien 7 für die spätere Stanzung weitgehend partikelfrei bleiben. Nach dem Auflegen der Deckfolie 3 werden die Distanzkörper 4 im Spalt eines Walzenpaars in die Dichtungsmasse eingedrückt.

Alternativ kommt auch in Frage, auf einer Walze elektrostatisch oder durch Haftkräfte anhaftende Distanzkörper auf die klebrige Dichtungsmasse aufzudrücken. Weiterhin ist es möglich, Endlos-Kunststoff- oder Fiberglasstränge aufzubringen. Schließlich können die Distanzkörper auf die Deckfolie geklebt werden, wenn auf die Folie zuvor schmale Klebstoffspuren aufgebracht werden. Die Deckfolie kann dann mit den angeklebten Distanzkörperspuren auf die Dichtungsmasse aufgelegt und angewalzt werden.

Als Trägerpapier 2 kommen neben Silikonpapier auch silikonisierte Metall-, Kunststoffolien und Textilbahnen in Frage. Als Deckfolie 3 sind neben Schmelzfolien auch Kunststoffolien, Textilbahnen und Metallfolien geeignet, sofern sie der Temperaturbelastung um 200 °C beim Einbrennlackieren standhalten. Bei der Auswahl spielt auch der Tagespreis eine wesentliche Rolle. Je nach Anwendung kann die Deckfolie fest oder abziehbar aufgebracht werden.

Die Dichtungsstreifen 6 sind an den Schneidlinien 7 geschlossen. Wie aus der Zeichnung ersichtlich ist, sind die in Strangrichtung liegenden Grenzen der Dichtungselemente keine Schneidlinien sondern Stranggrenzen. Das Sandwich wird dementsprechend nur quer und an den Aussparungen geschnitten. Wenn das Trägerpapier 2 seitlich übersteht, ist es für den Anwender einfacher, die Dichtungen vom Papier abzunehmen, um sie auf die abzudichtenden Stellen aufzubringen.

Der Durchmesser aller Distanzkörper 4 sollte möglichst gleich sein und einen Betrag abhängig von der einzustellenden Distanz haben. Diese Distanz hängt von den Unebenheiten der Verbindungspartner, den Elastizitätseigenschaften der Dichtungsmasse sowie der Dicke der Dichtung ab. Normalerweise soll der Durchmesser etwa die Hälfte bis zwei Drittel der Dichtungsdicke betragen. Beispielsweise wird bei 0,8 mm Schichtdicke eine Kugelfraktion zwischen 0,4 und 0,6 mm Durchmesser verwendet.

Bezugszeichenliste

    1 = Strang
    2 = Trägerpapier
    3 = Deckfolie
    4 = Distanzkörper
    5 = distanzkörperfreie Bereiche
    6 = Dichtungsstreifen
    7 = Schneidlinien

**Patentansprüche**

1. Plastische Dichtung mit einer Polymermischung, insbesondere aus Butylkautschuk, Polyisobutylen, Styrol-Butadien-Kautschuk, Polychloropren, Naturkautschuk oder Polyvinylchlorid, als Dichtmassestrang (1) zwischen einem abziehbaren Trägerpapier (2), z. B. Silikonpapier, und einer flexiblen Deckfolie (3), insbesondere einer Schmelzfolie, dadurch gekennzeichnet, daß in den Dichtmassestrang (1) einlagig, Kugelform oder eine ähnlich gerundete Form aufweisende Distanzkörper (4) von annähernd gleichem Durchmesser, der jeweils 1/2 bis 2/3 der Dichtungsdicke beträgt, aus einem gegenüber dem Material der Polymermischung harten Werkstoff derart orientiert eingebettet sind, daß der Dichtmassestrang (1) im Bereich von Stanzlinien (7) zum Querteilen des Stranges (1) in einzelne Dichtungsstreifen (6) oder zur Stanzung von Aussparungen distanzkörperfrei ausgebildet ist.

2. Dichtung nach Anspruch 1, dadurch gekennzeichnet, daß die Distanzkörper (4) in zur Längsrichtung des Dichtmassestranges (1) parallelen Spuren oder Bahnen nebeneinander aufgebracht sind.

3. Dichtung nach einem der vorangehenden Ansprüche, dadurch gekennzeichnet, daß die Distanzkörper (4) aus Glas, Metall, Keramik, Quarz oder Kunststoff bestehen.

4. Dichtung nach einem der vorangehenden Ansprüche, gekennzeichnet durch die Verwendung eines Dichtungsmaterials auf Basis vulkanierbarer oder dauerplastischer Kautschukmischungen.

5. Verfahren zum Herstellung einer Dichtung nach einem der Ansprüche 1 bis 4, bei dem aus einem relativ großflächigen Dichtmassestrang (1) Dichtungsstreifen (6) oder dergleichen einer jeweils gewünschten Form ausgestanzt bzw. ausgeschnitten werden, dadurch gekennzeichnet, daß die vorgesehenen Schneidlinien (7) im wesentlichen frei von Distanzkörpern (4) gehalten werden.

6. Verfahren nach Anspruch 5, dadurch gekennzeichnet, daß die Distanzkörper (4) in einzelnen außerhalb schmaler partikelfreier Bereiche (5) längs der Schneidlinien (7) liegender Spuren aufgebracht bzw. eingebettet werden.

**Claims**

1. Plastic seal with a polymer mixture, in particular of butyl rubber, polyisobutylene, styrol-butadiene-rubber, polychloroprene, natural rubber or polyvinyl chloride, as sealing mass strand (1) between a removable carrier paper (2), for example silicone paper, and a flexible cover film (3), in particular a fusible film, characterised thereby, that spacer bodies (4), which display spherical or a similarly rounded shape and are of approximately equal diameter amounting respectively to one half to two thirds of the seal thickness and of a material which is hard by comparison with the material of the polymer mixture, are embedded in a single layer oriented in the sealing mass strand (1) in such a manner that the sealing mass strand (1) is formed to be free of spacer bodies in the region of punch lines (7) for the transverse division of the strand (1) into individual sealing strips (6) or for the punching of recesses.

2. Seal according to claim 1, characterised thereby, that the spacer bodies (4) are applied one beside the other in tracks or paths parallel to the longitudinal direction of the sealing mass strand (1).

3. Seal according to one of the preceding claims, characterised thereby, that the spacer bodies (4) consist of glass, metal, ceramic, quartz or synthetic material.

4. Seal according to one of the preceding claims, characterised by the use of a sealing material on the base of vulcanisable or permanently plastic rubber mixtures.

5. Method for the manufacture of a seal according to one of the claims 1 to 4, in which sealing strips (6) or the like of a respectively desired shape are punched or cut out of a sealing mass strand (1) of relatively lare area, characterised thereby, that the provided cutting lines (7) are kept substantially free of spacer bodies (4).

6. Method according to claim 5, characterised thereby, that the spacer bodies (4) are applied or embedded in individual tracks along the cutting lines (7) outside narrow regions (5) free of particles.

**Revendications**

1. Joint plastique constitué d'un mélange de polymères comprenant notamment du butyl, de la polyisobutylène, du caoutchouc au styrène-butadiène, du polychloroprène, du caoutchouc naturel ou du chlorure de polyvinyle servant de bande de matériau d'étanchéité (1) entre un papier-support détachable (2), par exemple du papier au silicone, et un film extérieur souple (3), c'est-à-dire en particulier un film thermo-rétractable, caractérisé par le fait que la bande de matériau d'étanchéité monocouche (1) contient des éléments d'écartement (4) sphériques, ou d'une forme arrondie similaire, d'un diamètre à peu près identique, chacun de ces éléments ayant une épaisseur de 1/2 à 2/3 de l'épaisseur du joint et étant fabriqué dans une matière dure par rapport au matériau d'étanchéité constitué du mélange de polymères, ces éléments d'écartement étant noyés et orientés de manière qu'il ne soient pas situés et n'existent pas dans la zone des lignes de perforations (7) servant au découpage transversal de la bande de matériau d'étanchéité (1) pour former des sections d'étanchéité individuelles (6), ou dans la zone prévue pour le découpage de lumières.

2. Joint selon la revendication 1, caractérisé par le fait que les éléments d'écartement (4) sont disposés par rangées, ou suivant des lignes juxtaposées et parallèles au sens longitudinal de la bande de matériau d'étanchéité (1).

3. Joint selon l'une ou l'autre des revendications 1 ou 2, caractérisé par le fait que les éléments d'écartement (4) sont constitués de verre, de métal, de céramique, de quartz ou de matière plastique.

4. Joint selon l'une quelconque des revendications 1 à 3, caractérisé par le fait que le matériau d'étanchéité est à base de mélanges de caoutchoucs vulcanisables ou plastiques permanents.

5. Procédé de fabrication d'un joint suivant l'une quelconque des revendications 1 à 4, permettant de découper des tronçons de joints (6), ou similaires, dans une bande de matériau d'étanchéité (1) ayant une surface relativement grande pour obtenir la forme souhaitée, caractérisé par le fait que les lignes perforées de découpage (7) sont généralement exemptes d'éléments d'écartement (4).

6. Procédé selon la revendication 5, caractérisé par le fait que les éléments d'écartement (4) sont disposés, ou noyés, par rangées séparées se situant en dehors de zones étroites (5), exemptes de particules, le long des lignes perforées de découpage (7).

Fig. 2

Fig. 1